# EUROPEAN PATENT SPECIFICATION

(11) **EP 3 713 694 B1**
(45) Date of publication and mention of the grant of the patent: **03.01.2024**
(21) Application number: 17811465.8
(22) Date of filing: 20.11.2017
(51) Int. Cl.: B33Y 30/00, B29C 64/232, B29C 64/25, B22F 10/28, B29C 64/153, B33Y 10/00, B22F 12/00, B22F 12/90, B22F 12/41, B22F 12/44, B22F 12/45, B22F 12/49

(54) **APPARATUS AND METHOD FOR PRODUCING A THREE-DIMENSIONAL WORK PIECE**
VORRICHTUNG UND VERFAHREN ZUR HERSTELLUNG VON DREIDIMENSIONALEN WERKSTÜCKEN
APPAREIL ET PROCÉDÉ DE PRODUCTION D'UNE PIÈCE À TRAVAILLER TRIDIMENSIONNELLE

(43) Date of publication of application: 30.09.2020
(60) Divisional application: 23202964.5
(73) Proprietor: Nikon SLM Solutions AG, 23560 Lübeck (DE)
(72) Inventor: HUEBINGER, Karsten, 23560 Lübeck (DE); MUELLER, Bernd, 23560 Lübeck (DE); KOERNER, Peter, 23560 Lübeck (DE); BRUECK, Daniel, 23560 Lübeck (DE); KUNTOFF, Torsten, 23560 Lübeck (DE); WEISS, Soenke, 23560 Lübeck (DE)
(74) Representative: Schicker, Silvia
(86) International application number: PCT/EP2017/079765
(87) International publication number: WO 2019/096421

(56) References cited:
- WO-A2-2016/085334
- US-A1- 2007 023 977

## Description

The present invention relates to an apparatus and a method for producing a three-dimensional work piece.

Powder bed fusion is an additive layering process by which pulverulent, in particular metallic and/or ceramic raw materials can be processed to three-dimensional work pieces of complex shapes. To that end, a raw material powder layer is applied onto a carrier by a powder application device. The raw material powder is than subjected to radiation (e.g., laser or particle radiation) in a site-selective manner in dependence on the desired geometry of the work piece that is to be produced. The radiation penetrating into the powder layer causes heating and consequently melting or sintering of the raw material powder particles. Further raw material powder layers are then applied successively to the layer on the carrier that has already been subjected to radiation treatment, until the work piece has the desired shape and size. Powder bed fusion may be employed for the production of prototypes, tools, replacement parts, high value components or medical prostheses, such as, for example, dental or orthopedic prostheses, on the basis of CAD data. Examples for powder bed fusion techniques include Selective Laser Melting (SLM) and Selective Laser Sintering (SLS).

In order to maintain a high process quality, it is crucial that a location where the radiation beam impinges onto the raw material powder can be precisely controlled, in particular with regard to the preceding layers, which have already been solidified. The best results can be achieved when this location is not only controlled with regard to directions parallel to an uppermost layer of raw material (i.e., with regard to an x-y-plane) but also with regard to a direction perpendicular to the uppermost layer of raw material powder (i.e., a focus direction or z-direction).

In known apparatuses for producing a three-dimensional work piece, it is difficult to control a location where the radiation beam impinges onto the raw material powder over the entire manufacturing process, in particular due to thermal deformations of various structures and components of the apparatus.

US 2007/023977 A1 discloses a substrate sheet for the application of at least one layer of a laying-up material, for the production of a three-dimensional moulded body, by the serial attachment of layers of a powder laying-up material, hardened by means of electromagnetic, or particle radiation in the positions corresponding to a cross-section of the moulded body and provided for positioning on a support in a process chamber, whereby a mounting section is provided with a mounting surface for the mounting of layers and a support section is provided which comprises a support surface, facing the support and with at least one recess, running from the support surface of the support section, at least in a direction towards the mounting section.

WO 2016/085334 A2 discloses an apparatus and method for producing an object by means of additive manufacturing. The apparatus comprises a process chamber for receiving a bath of material which can be solidified by exposure to electromagnetic radiation, a support for positioning the object in relation to the surface level of the bath of material, and a solidifying device for solidifying a layer of the material on the surface level by means of electromagnetic radiation.

The invention is directed at the object of providing an apparatus and a method, which solve the above-described problems and/or other related problems.

This object is addressed by an apparatus according to claim 1 and by a method according to claim 14

According to a first aspect, an apparatus for producing a three-dimensional work piece is provided. The apparatus comprises a carrier configured to receive multiple layers of raw material powder, an irradiation unit configured to direct a radiation beam to predetermined sites of an uppermost layer of the raw material powder in order to solidify the raw material powder at the predetermined sites, a process chamber defining a volume through which the radiation beam is directed from the irradiation unit to the raw material powder, and a support structure provided outside the process chamber and supporting the irradiation unit.

According to the present disclosure, a plane parallel to a surface of the carrier of the apparatus (and, therefore, parallel to an uppermost layer of raw material powder) is defined to be an x-y-plane of a Cartesian coordinate system used herein. Further, a direction perpendicular to this plane is defined as a z-direction.

The carrier may have a rectangular cross-section in the x-y-plane. The carrier may further be movable in the z-direction in order to be lowered after an irradiation process of an uppermost layer of raw material powder is finished, such that a new layer of raw material powder can be applied by a powder application device. The irradiation unit may comprise a radiation source such as, e.g., a laser. As an alternative to a laser, also a particle source, such as an electron source, may be provided. In order to be able to direct the radiation beam in the x-y-plane, the irradiation unit may comprise at least one scanning unit. The scanning unit may comprise at least one movable mirror configured to direct the radiation beam to a desired location in the uppermost layer of raw material powder. The scanning unit may be controlled by a control unit. Further, the irradiation unit may comprise a focus unit configured to change a focus position along the beam path of the radiation beam (substantially along the z-direction).

The irradiation unit may be configured to generate and control the direction of more than one radiation beam. For example, at least two scanning units may be provided, wherein each of the scanning units is configured to control the direction of a corresponding radiation beam. Thereby, two or more melting pools can be formed at the same time. In case more than one radiation beam can be emitted, a surface of an uppermost layer of raw material powder may be subdivided into two or more irradiation areas, wherein each of the radiation beams can be scanned over a corresponding one of the irradiation areas. An overlap zone may exist, in which two or more adjacent irradiation areas overlap.

The process chamber defines a volume, which does not necessarily mean that the process chamber is hermetically sealed with regard to the exterior. The process chamber may be defined, e.g., by sidewalls of the process chamber, wherein four sidewalls may be provided, each sidewall extending substantially perpendicular to the x-y-plane. The sidewalls may comprise at least one opening for forming an inlet or outlet (e.g., for gas) and/or at least one attachment member for attaching an element of the apparatus to a corresponding one of the sidewalls. The volume of the process chamber may be limited in the z-direction to a bottom side by the carrier and/or by an uppermost layer of the raw material powder. As described later, a build cylinder may be attached or may be attachable to the bottom side of the process chamber. The volume of the process chamber may be limited to an upper side by a top wall having an opening for the one or more radiation beams. Alternatively, the upper side of the process chamber may be limited by a thermal isolation layer comprising a thermally isolating gas. Further, the upper side of the process chamber may also be limited by the irradiation unit, wherein the irradiation unit itself is not part of the process chamber. In other words, the process chamber may be defined as a wall structure providing a housing for a spatially, atmospherically, and fluidically closed process environment.

The support structure comprises a support frame. The support structure is arranged outside the process chamber such that no parts of the support structure are arranged within the process chamber. In other words, the support structure may be arranged such that it is not influenced by process heat generated in the process chamber, e.g., by a building process performed within the process chamber. The support structure may, e.g., comprise a support frame configured to independently stand on a ground (e.g., a ground plate). The support structure supports the irradiation unit, e.g., by providing a mechanical support for the irradiation unit. In other words, the irradiation unit may be mounted to the support structure. The irradiation unit may be mounted to the support structure by appropriate mounting means, such as screws, pins, bolts, etc. Further, the irradiation unit may be mounted to the support structure via one or more attachment members having mechanically and/or thermally decoupling properties. The support structure may comprise one or more support frames. In case the support structure comprises more than one support frame, the individual support frames may be releasably or non-releasably attached to each other. For example, each support frame of the support structure can be individually placed onto a common ground or a common base plate. The individual support frames may be nested. Each support frame of the support structure can support one or more components of the apparatus (such as the irradiation unit).

By supporting the irradiation unit by the support structure, which is provided outside the process chamber, it can be ensured that process heat generated within the process chamber has no influence on a position (i.e., a dislocation) of the irradiation unit with regard to the support structure. The position of the irradiation unit with regard to the support structure (which may be regarded as a reference coordinate system of the apparatus) thereby can be maintained unchanged. In examples in which further components are supported by the support structure, it can be ensured that the position of the irradiation unit with regard to these further components is maintained unchanged. Further, since the irradiation unit is not affected (or less affected) by process heat generated within the process chamber, positions of individual optical components within the irradiation unit with regard to each other and/or optical properties (e.g., focal length, etc.) of these optical components stay constant.

The support structure may be thermally decoupled from the process chamber, such that process heat inside the process chamber causes no substantial thermal deformation of the support structure.

According to the present disclosure, the expression "thermally decoupled" may mean that there is no (or almost no) heat transport between the two thermally decoupled elements. In other words, there is (almost) no thermal conduction between the two thermally decoupled elements and the thermal conductivity of a material provided between the two thermally decoupled elements is low. The process heat may be heat generated by the laser beam when it impinges onto and melts the raw material powder. For example, the process chamber may be attached to the support structure via one or more attachment members having thermally decoupling properties. When the process heat inside the process chamber causes no substantial thermal deformation of the support structure, a spatial relationship between the process chamber and the support structure may be maintained.

The irradiation unit may be mechanically decoupled from the process chamber, such that thermal deformation of the process chamber due to process heat inside the process chamber causes no substantial dislocation of the irradiation unit with regard to the support structure.

According to the present disclosure, the expression "mechanically decoupled" may mean that thermal deformation of a first element causes no (or almost no) mechanical dislocation of a second element with regard to the first element, when the first and second elements are mechanically decoupled from each other. For example, the irradiation unit and the process chamber may both be attached to the support structure. The support structure may comprise a rigid support frame, wherein the coefficient of thermal expansion of the support frame may be very low. In addition or alternatively, the irradiation unit may be thermally decoupled from the support structure and/or the process chamber may be thermally decoupled from the support structure. When the process heat inside the process chamber causes no substantial dislocation of the irradiation unit with regard to the support structure, it can be ensured that a spatial relationship between the irradiation unit and the support structure can be maintained.

An air gap may be provided between the support structure and a side wall of the process chamber. The air gap may enhance a thermal decoupling between the support structure and the process chamber, because air has a low thermal conductivity.

The support structure may comprise at least two feet configured to be placed on a ground plate. Thereby, the support structure may be configured to independently stand on a ground.

The apparatus may further comprise a build cylinder having at least one side wall configured to be in contact with the raw material powder applied onto the carrier. The at least one side wall of the build cylinder my thereby support the raw material powder, such that the raw material powder is kept in a predefined shape (e.g., a cuboid shape). The build cylinder may form a volume having a cross section substantially corresponding to a cross section of the carrier in top view. In other words, the carrier can move through the build cylinder, wherein a distance between edges of the carrier and the side walls of the build cylinder stays substantially constant. This distance may be very small and/or sealed by a sealing member, such that no raw material powder can pass through a slit between edges of the carrier and the build cylinder. For example, a cross section of the volume defined by the build cylinder may be, e.g., circular, rectangular (e.g., square-shaped), or rectangular with rounded edges. The build cylinder may be attached to a bottom side of the process chamber. Further, the build cylinder may be releasably attachable to a bottom side of the process chamber. As described later, the build cylinder may also be attached to a build cylinder movement unit configured to vertically move the build cylinder with regard to the support structure and with regard to the carrier.

The apparatus may further comprise a carrier movement unit configured to vertically move the carrier with regard to the process chamber and with regard to the build cylinder and within the build cylinder, the carrier movement unit being supported by the support structure.

Thereby, the carrier may be supported by the support structure via the carrier movement unit. By supporting the carrier movement unit by the support structure, it can be ensured that the carrier is thermally and/or mechanically decoupled from the process chamber and, thereby, a spatial relationship between the carrier and the irradiation unit can be maintained and controlled. Since the carrier can vertically move within the build cylinder, a volume filled with raw material powder can be increased or decreased by the movement of the carrier. The carrier movement unit can be configured to move downwards within the build cylinder after an irradiation process of an uppermost layer of raw material powder has been finished, such that a new layer of raw material powder can be applied on the previous uppermost layer. As mentioned above, the support structure may comprise a plurality of support frames. For example, the irradiation unit may be attached to a first one of these support frames and the carrier movement unit may be attached to a second one of the support frames. For example, the first and the second support frame of the support structure can be individually placed onto a common ground or a common base plate. The individual support frames may be nested.

The carrier movement unit may be mechanically decoupled from the process chamber, such that thermal deformation of the process chamber due to process heat inside the process chamber causes no substantial dislocation of the carrier movement unit with regard to the support structure.

For example, when each of the process chamber, the irradiation unit, and the carrier movement unit are independently supported by the support structure, these three elements of the apparatus can be thermally and/or mechanically decoupled from each other.

The apparatus may further comprise a build cylinder movement unit configured to vertically move the build cylinder with regard to the support structure. The build cylinder movement unit may be supported by the support structure. Further, the process chamber may be supported by the support structure and the build cylinder can be vertically moved with regard to the process chamber. For example, the build cylinder may be moved downwards after a building process of a work piece is completed, such that the work piece is accessible from its side and the raw material powder can be removed from the work piece.

The process chamber may be supported by the support structure at a ground level of the process chamber.

In other words, one or more attachment members via which the process chamber is attached to the support structure are arranged in an area of the ground level of the process chamber. Thereby, a location of the ground level of the process chamber can be predefined with regard to the support structure. In case the process chamber expands due to process heat generated within the process chamber, the location of the ground level of the process chamber does not change. The ground level of the process chamber may correspond to an uppermost layer of raw material powder provided on the carrier.

The apparatus may further comprise a powder application device supported by the support structure. In other words, the powder application device may be independently supported by the support structure, such that the powder application device is mechanically and/or thermally decoupled from other components of the apparatus, such as the process chamber, the irradiation unit, and the carrier.

The apparatus may further comprise a thermal isolation layer provided between the irradiation unit and the process chamber. The thermal isolation layer may be filled with thermally isolating gas. Further, at least one gas inlet may be provided configured for filling the thermal isolation layer with thermally isolating gas. The thermal isolation layer may be configured such that the radiation beam passing the thermal isolation layer is not influenced (i.e., deflected or absorbed) by the thermal isolation layer.

The apparatus may further comprise a vertical location measurement device configured to determine a vertical location of the carrier with regard to the support structure.

By determining the vertical location of the carrier with regard to the support structure, a location of an uppermost layer of raw material powder may be precisely estimated.

The vertical location measurement device may comprise a glass scale. By providing a glass scale it can be ensured that the vertical location measurement is not affected by thermal influences and, in particular by process heat generated within the process chamber.

According to a second aspect, a method for producing a three-dimensional work piece is provided. The method comprises applying a layer of raw material powder onto a carrier, directing, by an irradiation unit, a radiation beam to predetermined sites of the layer of the raw material powder in order to solidify the raw material powder at the predetermined sites, wherein the radiation beam is directed from the irradiation unit to the raw material powder through a volume defined by a process chamber, and wherein a support structure is provided outside the process chamber and supports the irradiation unit.

The details set out above with regard to the first aspect may also apply to the second aspect, where appropriate. In particular, the method of the second aspect may be carried out by the apparatus of the first aspect.

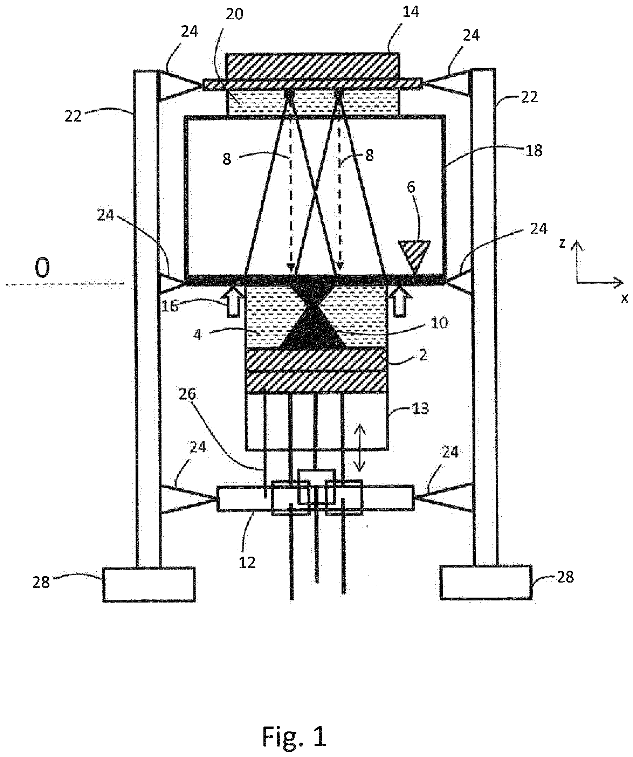

Preferred embodiments of the invention are described in greater detail with reference to the appended schematic drawing, wherein Fig. 1 shows a schematic side view of an apparatus according to the present invention. In known apparatuses for producing three-dimensional work pieces, a mechanical coupling and thermal expansion and deformation of machine components with regard to each other leads to variations in the process conditions and, thereby, to inaccuracies in a generation process.

More precisely, the simultaneous arrangement of three critical layers with regard to each other determines the process quality within a layer to be irradiated. These layers are an irradiation area (focal-/0-layer), a powder application layer, and an optics/scanner layer. In addition, controlling a position of a vertical movement unit (e.g., a carrier movement unit) is crucial in order to maintain a homogeneous layer-wise movement of the carrier.

In an ideal case, these layers have to be aligned with regard to each other during the entire building process, namely translational and rotational in x-y-direction and translational in z-direction. Tolerances in this alignment determine or at least have an influence on the quality of the work piece.

In known apparatuses, components determining these layers (irradiation unit, powder application device, carrier movement unit) are indirectly via other central machine components or even directly mechanically coupled to each other. Thermal deformations (and, in particular, thermal expansion) and static loads have a negative influence on the tolerances.

In other words, in order to achieve a high quality of a produced work piece, it is necessary that a (three-dimensional) position of the uppermost layer of raw material powder with regard to the irradiation unit is known, such that the radiation beam can be directed to predetermined locations of the raw material powder. One possibility of obtaining knowledge of the spatial relationship between the raw material powder and the irradiation unit is to perform periodic calibration measurements during a production process. Another option is to try to maintain the spatial relationship between the raw material powder and the irradiation unit as constant as possible, such that no calibration measurements during the production process are necessary.

According to the present disclosure, a solution to the aforementioned problem comprises providing a support structure supporting the irradiation unit, wherein the support structure is provided outside the process chamber. According to an embodiment, components determining the aforementioned layers (such as irradiation unit, a powder application device, and carrier movement unit) are mechanically and, more advantageous, mechanically and thermally decoupled from each other. Components bearing thermal load, such as the process chamber, are thereby mechanically and/or thermally decoupled from the aforementioned components determining the layers. A thermal influence on the components determining the layers can therefore be prevented. This may firstly mean, that a direct thermal influence via heat transfer and, thereby, deformation of a component determining one of the aforementioned layers can be prevented (thermal decoupling). Secondly, that may mean that indirect thermal influence in the form of mechanical influence caused by thermal deformation of the process chamber can be prevented (mechanical decoupling). Hence, thermal and/or mechanical decoupling can be implemented in order to improve the quality of a building process.

The above advantages can be achieved by using a support structure, such as an external support structure, which may also be referred to as exoskeleton. This support structure may represent an external support frame, which supports one or more of the components defining the aforementioned layers. By individually mounting each of the components to the support structure, the components have a fixed spatial relationship with regard to each other. Due to the mechanical and/or thermal decoupling of the components, this spatial relationship maintains fixed during an entire building process. Examples of the components are, e.g., a process chamber, a carrier, a carrier movement unit, a powder application device, an irradiation unit, and a process chamber movement unit.

Fig. 1 shows a schematic side view of an apparatus for producing three-dimensional work pieces according to the present invention. The apparatus comprises a carrier 2, which is configured to receive multiple layers of raw material powder 4. During a building process, a first layer of raw material powder 4 is applied onto the carrier 2 by means of a powder application device 6 of the apparatus. The raw material powder 4 (e.g., metal powder) can be melted and solidified by a radiation beam 8. The radiation beam 8 is directed to the first layer of raw material powder 4 in order to solidify the raw material powder 4 in a site-selective manner according to CAD data of a work piece 10 to be produced. The locations on the uppermost layer of the raw material powder 4 to which the radiation beam 8 is directed therefore correspond to a geometry of the work piece 10 to be produced. The carrier 2 is movable along the z-direction (indicated by an arrow in Fig. 1) in order to lower the carrier 2 after a solidification process of a layer of raw material powder 4 is finished.

For enabling this vertical movement of the carrier 2, the apparatus comprises a carrier movement unit 12. After the carrier 2 has been lowered, a new layer of raw material powder 4 is applied and a solidification process (i.e., an irradiation process) of this new layer begins. Thus, layer by layer, the work piece 10 is built up on the carrier 2.

For housing the raw material powder 4 and, optionally, for guiding the movable carrier 2, the apparatus comprises a build cylinder 13 having at least one side wall configured to be in contact with the raw material powder 4. In the embodiment shown in Fig. 1, the build cylinder 13 has four side walls defining a cuboid volume in which the raw material powder 4 is located. This volume is limited to its lower side by the carrier 2 having a rectangular cross-section. The side wall of the build cylinder 13 are in contact with the raw material powder 4 applied onto the carrier 2 and are configured to support the raw material powder 4, such that the raw material powder 4 maintains its (cuboid) shape. A distance between the side walls of the build cylinder 13 and corresponding edges of the carrier 2 is very small or even negligible, such that no raw material powder 4 can pass through a slit between the carrier 2 and the build cylinder 2. Additionally, the carrier 2 may comprise a sealing member arranged at its edges. After one layer of raw material powder 4 has been completely irradiated (according to a geometry of the desired work piece 10), the carrier 2 is lowered within the build cylinder 13, such that a new layer of raw material powder 4 can be applied.

The apparatus further comprises an irradiation unit 14 comprising one or more radiation sources. In the embodiment shown in Fig. 1, the irradiation unit 14 is configured to generate two independent radiation beams 8. Each of the radiation beams 8 can be controlled and directed to a desired location by means of a corresponding scanning unit. Each of the scanning units comprises at least one movable mirror, which is configured to deflect the respective radiation beam to the desired location on the uppermost layer of the raw material powder. The two radiation beams can be generated, e.g., by using only one radiation source, dividing the beam emitted by the radiation source by means of a beam splitter into two sub-beams and by directing each of the sub-beams to one of the scanning units. As an alternative, two radiation sources may be provided, wherein each radiation source emits a beam which is directed to one of the scanning units.

As shown in Fig. 1, each of the two radiation beams 8 defines an irradiation area on a surface of an uppermost layer of the raw material powder 4. An overlap area is provided, in which the irradiation area of a first scanning unit and the irradiation area of a second scanning unit overlap.

Further, the irradiation unit 14 comprises, for each of the radiation beams 8, a focus unit configured to change a focus position of the respective radiation beam 8 in a direction along a beam path of the corresponding radiation beam 8. By means of the focus unit, a position of a focus point of the respective laser beam may be adjusted in a depth direction (z-direction).

According to the present embodiment, the radiation sources of the irradiation unit 14 are lasers and the emitted radiation beams 8 are laser beams. More precisely, the radiation sources may, for example, comprise a diode pumped Ytterbium fiber laser emitting laser light having a wavelength of approximately 1070 to 1080 nm. The irradiation unit 14 is configured to selectively irradiate each of the radiation beams 8 onto the raw material 4 on the carrier 2. By means of the irradiation unit 14, the raw material powder 4 may be subjected to laser radiation in a site-selective manner in dependence on the desired geometry of the work piece 10 that is to be produced.

Each of the scanning units comprises movable mirrors for directing the radiation beams 8 in directions parallel to the carrier 2, i.e., directions parallel to the uppermost layer of raw material 4. In other words, a location of the radiation beams 8 can be varied both in the x-direction and the y-direction.

In addition to the scanning units and the focus units, the irradiation unit 14 may comprise further optical components for guiding and/or processing the radiation beams 8. For example, a beam expander may be provided for expanding the radiation beams 8. Further, object lenses may be provided behind each of the scanning units. The object lenses may be f-theta object lenses.

The apparatus further comprises a control unit (not shown) for controlling functionalities of the apparatus before, during, and after a building process. In particular, the control unit is configured to control the functionalities of the apparatus, such as the vertical movement of the carrier 2 via the carrier movement unit 12, the vertical movement of the build cylinder 13 via the build cylinder movement unit 16 (if applicable), the raw material powder application by the powder application device 6, the scanning of the scanning units, the radiation source of the irradiation unit 14, etc.

A volume through which the radiation beams 8 are directed from the irradiation unit 14 to the uppermost layer of raw material powder 4 is defined by the process chamber 18. As shown in Fig. 1, the process chamber 18 has side walls extending perpendicular to the x-y-plane and a bottom wall and a top wall extending parallel to the x-y-plane. Although the process chamber 18 thereby represents a box structure (or cuboid structure), the process chamber 18 is not limited to such a cuboid. The process chamber may have other forms, such as, e.g., a cylindrical form, a form of a pyramid, etc. Further, the process chamber is not necessarily hermetically sealed to the exterior. For example, openings may be provided in the sidewalls of the process chamber 18, which may serve, e.g., as gas inlets and/or gas outlets. The top wall and/or the bottom wall of the process chamber 18 may be omitted or large openings may be provided in the top wall and/or the bottom wall. For example, the top wall comprises an opening through which the laser beams 8 can enter the process chamber 18. Further, in addition to or as an alternative to a top wall of the process chamber 18, a thermal isolation layer 20 may be provided at an interface between the process chamber 18 and the irradiation unit 14 as shown in Fig. 1. The process chamber 18 is limited to a bottom side by the raw material powder 4 in case raw material powder 4 is applied to the carrier 2. Otherwise, the process chamber 18 is limited to its bottom side by the carrier 2. The build cylinder 13 directly adjoins the process chamber 18. In one example, the build cylinder 13 is attached (i.e., permanently affixed) to the process chamber 18. In another example, the build cylinder 13 is releasably attached to the process chamber 18. Further, the build cylinder 13 can be movable with regard to the process chamber by means of a build cylinder movement unit 16 as described below.

As explained above, the process chamber 18 fulfills a housing function for maintaining a spatially, atmospherically, and fluidically closed (or substantially closed) process environment.

During a building process, process heat is generated within the process chamber 18, in particular in a lower area of the process chamber 18, where the radiation beams 8 impinge onto the raw material powder 4 and form melting pools in the raw material powder 4. By means of the walls of the process chamber 18, the generated process heat stays inside the process chamber 18. In other words, the walls of the process chamber 18 provide a thermal isolation to the exterior. However, the process heat generated within the process chamber 18 may cause thermal deformations of the process chamber 18 and, in particular of walls of the process chamber 18.

As shown in Fig. 1, the apparatus comprises a support structure 22 in the form of an external support frame (exoskeleton). The irradiation unit 14 is supported by the support structure 22 via attachment members 24. The attachment members 24 provide a stable mechanical connection between the support structure 22 and the irradiation unit 14. In addition to that, the attachment members 24 may have thermally decoupling properties, which means that heat transport through the attachment members 24 is suppressed. In other words, a thermal conductivity of the attachment members 24 may be low. This also holds for each of the attachment members 24 described in the following.

The support structure 22 is provided outside the process chamber 18 and, therefore, the support structure 22 is not directly influenced by process heat generated within the process chamber 18. As shown in Fig. 1, an air gap is provided between the process chamber 18 and the support structure 22, such that the process chamber 18 and the support structure 22 are thermally isolated from each other.

The process chamber 18 is supported by the support structure 22 via attachment members 24. As shown in Fig. 1, the process chamber 18 is supported from the outside, such that the support structure 22 does not extend into the process chamber 18. The process chamber 18 is thermally decoupled from the support structure 22. That means, that process heat generated within the process chamber 18 is not transported to the support structure 22, e.g., because the attachment members 24 have a low thermal conductivity. Further, an air gap is provided between the support structure 22 and the process chamber 18, which represents a thermal isolation layer. The process chamber 18 is also mechanically decoupled from the support structure 22. That means that a thermal deformation of the process chamber 18 caused by process heat generated within the process chamber 18 does not cause a deformation of the support structure 22. This behavior can be achieved by providing a rigid structure for the support structure 22. In other words, the support structure 22 is made of rigid material, such as metal, which is not deformed by forces caused by deformations of the process chamber 18. Further, the attachment members 24 may have mechanically decoupling properties, which means that the attachment members 24 can absorb deformations of the process chamber 18.

The process chamber 18 is attached to the support structure 22 in a lower area of the process chamber 18 as shown in Fig. 1. For example, the process chamber 18 can be supported by the support structure 22 in the height of a 0-level (see dashed line in Fig. 1). This 0-level can be used as reference plane, which coincidences with an uppermost layer of raw material powder 4. By attaching the process chamber 18 to the support structure 22 close to a bottom wall of the process chamber 18, thermal deformations that occur within the process chamber 18 have no or almost no influence on a position of the 0-level mentioned above. Therefore, the 0-level maintains its position with regard to the support structure 22.

By arranging the process chamber 18 and the irradiation unit 14 as described above, i.e., by individually supporting the process chamber 18 and the irradiation unit 14 on the support structure 22, the process chamber 18 and the irradiation unit 14 can be thermally and mechanically decoupled from each other. With regard to the thermal decoupling, that means that process heat generated within the process chamber 18 is not transported to the irradiation unit 14 and, therefore, does not cause a thermal deformation or thermal displacement of the irradiation unit 14 with regard to the process chamber 18. Further, since the irradiation unit 14 is not affected (or less affected) by process heat generated within the process chamber 18, positions of individual optical components within the irradiation unit 14 with regard to each other and/or optical properties (e.g., focal length, etc.) of these optical components stay constant. With regard to the mechanical decoupling, that means that thermal deformations of the process chamber 18 do not cause deformations or dislocations of the irradiation unit 14. Hence, it can be ensured that a spatial relationship between the process chamber 18 (in particular, a bottom region of the process chamber 18 where the raw material powder 4 is provided) and the irradiation unit 14 is maintained during a building process. In other words, the irradiation unit 14 does not move with respect to the process chamber 18 during the building process, which improves the precision of the building process and, therefore, the quality of the produced work piece 10.

In an embodiment, the thermal isolation layer 20 is provided between the process chamber 18 and the irradiation unit 14 in order to enhance the thermal decoupling of the two components. The thermal isolation layer 20 may comprise a thermally isolating gas.

The powder application device 6 is also individually supported by the support structure 22 via corresponding attachment members 24 (not shown). Thereby, the powder application device 6 can be mechanically decoupled from the process chamber 18, such that thermal deformations of the process chamber 18 do not cause any deformations or dislocations of the powder application device 6.

Optionally, the apparatus may comprise a build cylinder movement unit 16 as indicated by arrows in Fig. 1. In that case, the build cylinder movement unit 16 is either directly supported by the support structure 22 via corresponding attachment members (not shown) or the build cylinder movement unit 16 is attached to the process chamber 18, e.g., to a side wall or a bottom wall of the process chamber 18. The build cylinder movement unit 16 is configured to move the build cylinder 13 in a vertical direction (z-direction) with regard to the support structure 22. Since the process chamber 18 is supported and affixed to the support structure 22, the build cylinder movement unit 16 is configured to vertically move the build cylinder 13 with regard to the process chamber 18. For example, the control unit may be configured to vertically move the build cylinder 13 downwards after a building process of the work piece 10 is completed, such that the work piece 10 is accessible from its sides and raw material powder 4 can be removed from the work piece 10.

The apparatus comprises the carrier movement unit 12, which is configured to move the carrier 2 in a vertical direction (z-direction). The carrier movement unit 12 is supported by the support structure 22 via attachment members 24. By individually supporting the carrier movement unit 12 to the support structure 22, the carrier movement unit 12 can be mechanically and thermally decoupled from the other components of the apparatus and, in particular, from the process chamber 18. Hence, the carrier movement unit 12 is thermally and mechanically decoupled from the process chamber 18. Therefore, process heat generated within the process chamber 18 does not lead to a displacement of the carrier movement unit 12 or the carrier 2 coupled to the carrier movement unit 12.

Optionally, a vertical location measurement device 26 may be provided in the form of a glass scale. The vertical location measurement device 26 is configured to measure a vertical location of the carrier 2 with regard to the carrier movement device 12 and, therefore, with regard to the support structure 22. Based on measurement results of this vertical location measurement device 26, a location of the carrier 2 and a location of an uppermost layer of raw material powder 4 can be determined by the control unit.

The support structure 22 comprises at least two feet 28 configured to be placed onto a ground plate. By means of the feet 28 the support structure 22 can stably be placed onto a ground such that deformations and vibrations can be avoided.

Although the support structure 22 of the embodiment shown in Fig. 1 consists of one single support frame, the support structure may comprise more than one support frame. These support frames can be releasably or non-releasably attached to each other. Further, a plurality of support frames can be provided and each support frame supports one or more of the components 14, 18, 6, 16, and 12. For example, the support structure can comprise a first support frame for supporting the irradiation unit 14 and a second support frame for supporting the carrier movement unit 12. The individual support frames of the support structure can be placed (e.g., attached) on a common ground or a common base plate. The support frames can be nested or arranged next to each other. In any case, the support structure provides a structure, where the individual components are supported and attached and a location of the components with regard to a common reference does not change. This common reference can be the support structure itself or a common ground or a common base plate. In particular, a position of the components with respect to each other does not change.

As described above and as shown in Fig. 1, each of the components 14, 18, 6, 16, and 12 are individually supported by the support structure 22 via corresponding attachment members 24. By individually supporting these components to the support structure 22, the components can be mechanically and thermally decoupled from each other. In particular, the components can be placed in a spatial relationship to each other which is independent of process heat generated within the process chamber 18 and/or independent of mechanical deformations of the process chamber 18 caused by process heat generated within the process chamber 18. Although it is advantageous to support all of the components 14, 18, 6, 16, and 12 by the support unit 22, the advantages of the present disclosure can also be achieved if one or more of the aforementioned components is not individually supported by the support structure. However, it is advantageous that at least the irradiation unit 14 and the process chamber 18 are individually supported by the support structure 22.

In one embodiment, process heat may be directed into the support structure 22 but this process heat does not cause any dislocation (or no substantial dislocation) of the individual components 14, 18, 6, 16, and 12 with respect to each other, because a coefficient of thermal expansion of the support structure 22 is very low. In that case, the components are at least mechanically decoupled from each other.

Since a spatial relationship between the individual components can be maintained, a process precision can be improved, which leads to a higher quality of a generated work piece 10.

Further, a preheating time can be reduced, which is needed for calibrating and for starting the building process in order to work under stable thermal conditions.

Another advantage of the structure described above is that individual components can be easily exchanged and replaced without negative influence on the rest of the apparatus.

## Claims

1. An apparatus for producing a three-dimensional work piece (10) comprising:
a carrier (2) configured to receive multiple layers of raw material powder (4);
an irradiation unit (14) configured to direct at least two radiation beams (8) to predetermined sites of an uppermost layer of the raw material powder (4) in order to solidify the raw material powder (4) at the predetermined sites;
a process chamber (18) defining a volume through which the radiation beams (8) are directed from the irradiation unit (14) to the raw material powder (4); and
a support structure (22) provided outside the process chamber (18) and supporting the irradiation unit (14) such that a position of the irradiation unit (14) with regard to the support structure (22) can be maintained unchanged,
wherein the support structure (22) represents a support frame supporting the process chamber (18) and the irradiation unit (14), wherein the irradiation unit (14) is mechanically decoupled from the process chamber (18), such that thermal deformation of the process chamber (18) due to process heat inside the process chamber (18) causes no substantial dislocation of the irradiation unit (14) with regard to the support structure (22).

2. The apparatus of claim 1, wherein the support structure (22) is thermally decoupled from the process chamber (18), such that process heat inside the process chamber (18) causes no substantial thermal deformation of the support structure (22).

3. The apparatus of claim 1 or 2, wherein an air gap is provided between the support structure (22) and a side wall of the process chamber (18).

4. The apparatus of any one of claims 1 to 3, further comprising a build cylinder (13) having at least one side wall configured to be in contact with the raw material powder applied onto the carrier (2).

5. The apparatus of claim 4, further comprising:
a carrier movement unit (12) configured to vertically move the carrier (2) with regard to the process chamber (18) and with regard to the build cylinder (13) and within the build cylinder (13), the carrier movement unit (12) being supported by the support structure (22).

6. The apparatus of claim 5, wherein the carrier movement unit (12) is mechanically decoupled from the process chamber (18), such that thermal deformation of the process chamber (18) due to process heat inside the process chamber (18) causes no substantial dislocation of the carrier movement unit (12) with regard to the support structure (22).

7. The apparatus of any of claims 4 to 6, further comprising a build cylinder movement unit (16) configured to vertically move the build cylinder (13) with regard to the support structure (22).

8. The apparatus of any of claims 1 to 7, wherein the process chamber (18) is supported by the support structure (22) at a ground level of the process chamber (18).

9. The apparatus of claim 8, wherein the process chamber (18) is supported by the support structure (22) via the process chamber movement unit (16).

10. The apparatus of any of claims 1 to 9, further comprising a powder application device (6) supported by the support structure (22).

11. The apparatus of any of claims 1 to 10, further comprising a thermal isolation layer (20) provided between the irradiation unit (14) and the process chamber (18).

12. The apparatus of any of claims 1 to 11, further comprising a vertical location measurement device (26) configured to determine a vertical location of the carrier (2) with regard to the support structure (22).

13. The apparatus of claim 12, wherein the vertical location measurement device (26) comprises a glass scale.

14. A method for producing a three-dimensional work piece (10) comprising:
applying a layer of raw material powder (4) onto a carrier (2);
directing, by an irradiation unit (14), at least two radiation beams (8) to predetermined sites of the layer of the raw material powder (4) in order to solidify the raw material powder (4) at the predetermined sites, wherein the radiation beams (8) are directed from the irradiation unit (14) to the raw material powder (4) through a volume defined by a process chamber (18),
and wherein a support structure (22) is provided outside the process chamber (18) and supports the irradiation unit (14) such that a position of the irradiation unit (14) with regard to the support structure (22) can be maintained unchanged,
wherein the support structure (22) represents a support frame supporting the process chamber (18) and the irradiation unit (14), wherein the irradiation unit (14) is mechanically decoupled from the process chamber (18), such that thermal deformation of the process chamber (18) due to process heat inside the process chamber (18) causes no substantial dislocation of the irradiation unit (14) with regard to the support structure (22).

## Patentansprüche

1. Vorrichtung zur Herstellung eines dreidimensionalen Werkstücks (10), die umfasst:
einen Träger (2), konfiguriert, mehrere Rohstoffpulverschichten (4) aufzunehmen;
eine Bestrahlungseinheit (14), die konfiguriert ist, mindestens zwei Bestrahlungsstrahlen (8) auf vorbestimmte Stellen einer obersten Rohstoffpulverschicht (4) zu richten, um das Rohstoffpulver (4) an den vorbestimmten Stellen zu verfestigen;
eine Prozesskammer (18), die ein Volumen definiert, durch das die Bestrahlungsstrahlen (8) von der Bestrahlungseinheit (14) auf das Rohstoffpulver (4) gerichtet werden; und
eine Stützstruktur (22), die außerhalb der Prozesskammer (18) vorgesehen ist und die Bestrahlungseinheit (14) so abstützt, dass eine Position der Bestrahlungseinheit (14) in Bezug auf die Stützstruktur (22) unverändert beibehalten werden kann,
wobei die Stützstruktur (22) einen Stützrahmen darstellt, der die Prozesskammer (18) und die Bestrahlungseinheit (14) abstützt, wobei die Bestrahlungseinheit (14) mechanisch von der Prozesskammer (18) entkoppelt ist, so dass eine thermische Verformung der Prozesskammer (18) aufgrund von Prozesswärme im Inneren der Prozesskammer (18) keine wesentliche Verschiebung der Bestrahlungseinheit (14) in Bezug auf die Stützstruktur (22) verursacht.

2. Vorrichtung nach Anspruch 1, wobei die Stützstruktur (22) thermisch von der Prozesskammer (18) entkoppelt ist, so dass Prozesswärme im Inneren der Prozesskammer (18) keine wesentliche thermische Verformung der Stützstruktur (22) verursacht.

3. Vorrichtung nach Anspruch 1 oder 2, wobei ein Luftspalt zwischen der Stützstruktur (22) und einer Seitenwand der Prozesskammer (18) vorgesehen ist.

4. Vorrichtung nach einem der Ansprüche 1 bis 3, die ferner einen Bauzylinder (13) mit mindestens einer Seitenwand umfasst, die so konfiguriert ist, dass sie mit dem auf den Träger (2) aufgebrachten Rohstoffpulver in Kontakt steht.

5. Vorrichtung nach Anspruch 4, die ferner umfasst
eine Trägerbewegungseinheit (12), die konfiguriert ist, den Träger (2) in Bezug auf die Prozesskammer (18) und in Bezug auf den Bauzylinder (13) und innerhalb des Bauzylinders (13) vertikal zu bewegen, wobei die Trägerbewegungseinheit (12) von der Stützstruktur (22) abgestützt wird.

6. Vorrichtung nach Anspruch 5, wobei die Trägerbewegungseinheit (12) mechanisch von der Prozesskammer (18) entkoppelt ist, so dass eine thermische Verformung der Prozesskammer (18) aufgrund von Prozesswärme im Inneren der Prozesskammer (18) keine wesentliche Verschiebung der Trägerbewegungseinheit (12) in Bezug auf die Stützstruktur (22) verursacht.

7. Vorrichtung nach einem der Ansprüche 4 bis 6, die ferner eine Bauzylinderbewegungseinheit (16) umfasst, die konfiguriert ist, den Bauzylinder (13) in Bezug auf die Stützstruktur (22) vertikal zu bewegen.

8. Vorrichtung nach einem der Ansprüche 1 bis 7, wobei die Prozesskammer (18) von der Stützstruktur (22) auf Bodenhöhe der Prozesskammer (18) abgestützt wird.

9. Vorrichtung nach Anspruch 8, wobei die Prozesskammer (18) von der Stützstruktur (22) über die Prozesskammerbewegungseinheit (16) abgestützt wird.

10. Vorrichtung nach einem der Ansprüche 1 bis 9, die ferner eine Pulverauftragsvorrichtung (6) umfasst, die von der Stützstruktur (22) abgestützt wird.

11. Vorrichtung nach einem der Ansprüche 1 bis 10, die ferner eine thermische Isolierschicht (20) umfasst, die zwischen der Bestrahlungseinheit (14) und der Prozesskammer (18) vorgesehen ist.

12. Vorrichtung nach einem der Ansprüche 1 bis 11, die ferner eine Vorrichtung zur Messung der vertikalen Position (26) umfasst, die konfiguriert ist, eine vertikale Position des Trägers (2) in Bezug auf die Stützstruktur (22) zu bestimmen.

13. Vorrichtung nach Anspruch 12, wobei die Vorrichtung zur Messung der vertikalen Position (26) eine Glaswaage umfasst.

14. Verfahren zur Herstellung eines dreidimensionalen Werkstücks (10), das umfasst:
Auftragen einer Rohstoffpulverschicht (4) auf einen Träger (2);
Richten von mindestens zwei Bestrahlungsstrahlen (8) auf vorbestimmte Stellen der Rohstoffpulverschicht (4) mittels einer Bestrahlungseinheit (14), um das Rohstoffpulver (4) an den vorbestimmten Stellen zu verfestigen, wobei die Bestrahlungsstrahlen (8) von der Bestrahlungseinheit (14) durch ein durch eine Prozesskammer (18) definiertes Volumen auf das Rohstoffpulver (4) gerichtet werden,
und wobei eine Stützstruktur (22) außerhalb der Prozesskammer (18) vorgesehen ist und die Bestrahlungseinheit (14) so stützt, dass eine Position der Bestrahlungseinheit (14) in Bezug auf die Stützstruktur (22) unverändert beibehalten werden kann,
wobei die Stützstruktur (22) einen Stützrahmen darstellt, der die Prozesskammer (18) und die Bestrahlungseinheit (14) abstützt, wobei die Bestrahlungseinheit (14) mechanisch von der Prozesskammer (18) entkoppelt ist, so dass eine thermische Verformung der Prozesskammer (18) aufgrund von Prozesswärme im Inneren der Prozesskammer (18) keine wesentliche Verschiebung der Bestrahlungseinheit (14) in Bezug auf die Stützstruktur (22) verursacht.

## Revendications

1. Appareil de production d'une pièce tridimensionnelle (10) comprenant:
un support (2) conçu pour recevoir de multiples couches de poudre de matière première (4);
une unité de rayonnement (14) conçue pour diriger au moins deux faisceaux de rayonnement (8) vers des sites prédéterminés d'une couche supérieure de la poudre de matière première (4) afin de solidifier la poudre de matière première (4) dans les sites prédéterminés;
une chambre de processus (18) définissant une volume à travers lequel sont dirigées les faisceaux de rayonnement (8) provenant de l'unité de rayonnement (14) vers la poudre de matière brute (4); et
une structure de support (22) disposée à l'extérieur de la chambre de processus (18) et supportant l'unité de rayonnement (14) de sorte qu'une position de l'unité de rayonnement (14) par rapport à la structure de support (22) peut demeurer inchangée,
dans lequel la structure de support (22) représente un cadre support supportant la chambre de processus (18) et l'unité de rayonnement (14), dans lequel l'unité de rayonnement (14) est désaccouplée mécaniquement de la chambre de processus (18), de sorte qu'une déformation thermique de la chambre de processus (18) en raison de la chaleur de processus à l'intérieur de la chambre de processus (18) ne provoque aucun déplacement important de l'unité de rayonnement (14) par rapport à la structure de support (22).

2. Appareil selon la revendication 1, dans lequel la structure de support (22) est désaccouplée thermiquement de la chambre de processus (18), de sorte que la chaleur de processus à l'intérieur de la chambre de processus (18) ne provoque aucune déformation importante de la structure de support (22).

3. Appareil selon la revendication 1 ou 2, dans lequel un espace d'air est ménagé entre la structure de support (22) et une paroi latérale de la chambre de processus (18).

4. Appareil selon l'une quelconque des revendications 1 à 3, comprenant en outre un cylindre structural (13) ayant au moins une paroi latérale conçue pour être en contact avec la poudre de matière première appliquée au support (2).

5. Appareil selon la revendication 4, comprenant en outre:
une unité de déplacement de support (12) conçu pour déplacer verticalement le support (2) par rapport à la chambre de processus (18) et par rapport au cylindre structural (13) et à l'intérieur du cylindre structural (13), l'unité de déplacement de support (12) étant supportée par la structure de support (22).

6. Appareil selon la revendication 5, dans lequel l'unité de déplacement de support (12) est désaccouplée mécaniquement de la chambre de processus (18), de sorte qu'une déformation thermique de la chambre de processus (18) en raison de la chaleur de processus à l'intérieur de la chambre de processus (18) provoque aucune dislocation important de l'unité de déplacement de support (14) par rapport à la structure de support (22).

7. Appareil selon l'une quelconque des revendications 4 à 6, comprenant en outre une unité de déplacement de cylindre structural (16) conçue pour déplacer verticalement le cylindre structural (13) par rapport à la structure de support (22).

8. Appareil selon la revendication 1 ou 7, dans lequel la chambre de processus (18) est supportée par la structure de support (22) au niveau du sol de la chambre de processus (18).

9. Appareil selon la revendication 8, dans lequel la chambre de processus (18) est supportée par la structure de support (22) par l'intermédiaire de l'unité de déplacement de chambre de processus (16).

10. Appareil selon l'une quelconque des revendications 1 à 9, comprenant en outre un dispositif d'application de poudre (6) supporté par la structure de support (22).

11. Appareil selon l'une quelconque des revendications 1 à 10, comprenant en outre une couche d'isolation thermique (20) disposée entre l'unité de rayonnement (14) et la chambre de processus (18).

12. Appareil selon l'une quelconque des revendications 1 à 11, comprenant en outre un dispositif de mesure d'emplacement vertical (26) conçu pour déterminer un emplacement vertical du support (2) par rapport à la structure de support (22).

13. Appareil selon la revendication 12, dans lequel le dispositif de mesure d'emplacement vertical (26) comprend une règle graduée en verre.

14. Procédé de production d'une pièce tridimensionnelle (10) comprenant:
l'application d'une couche de poudre de matière première (4) sur un support (2);
diriger, par une unité de rayonnement (14), au moins deux faisceaux de rayonnement (8) vers des sites prédéterminés de la couche de la poudre de matière première (4) afin de solidifier la poudre de matière première (4) dans les sites prédéterminés, dans lequel les faisceaux de rayonnement (8) sont dirigés depuis l'unité de rayonnement (14) vers la poudre de matière première (4) à travers un volume défini par une chambre de processus (18),
et dans lequel une structure de support (22) disposée à l'extérieur de la chambre de processus (18) et supportant l'unité de rayonnement (14) de sorte qu'une position de l'unité de rayonnement (14) par rapport à la structure de support (22) puisse demeurer inchangée,
dans lequel la structure de support (22) représente un cadre support supportant la chambre de processus (18) et l'unité de rayonnement (14), dans lequel l'unité de rayonnement (14) est désaccouplée mécaniquement de la chambre de processus (18), de sorte qu'une déformation thermique de la chambre de processus (18) en raison de la chaleur de processus à l'intérieur de la chambre de processus (18) provoque aucun déplacement important de l'unité de rayonnement (14) par rapport à la structure de support (22).
